# FASCICULE DE BREVET EUROPEEN

(11) **EP 2 702 291 B1**
(45) Date de publication et mention de la délivrance du brevet: **01.06.2016**
(21) Numéro de dépôt: 12722402.0
(22) Date de dépôt: 12.04.2012
(51) Int. Cl.: F16D 55/226, F16D 65/00

(54) **PROTECTEUR DE DISQUE DE FREIN BI-MATIERE ALU/ACIER ASSEMBLE PAR CLINCHAGE**
MITTELS FALZEN MONTIERTER ZWEISTOFF-ALUMINIUM/STAHL-BREMSSCHEIBENSCHUTZ
DUAL-MATERIAL ALUMINUM/STEEL BRAKE DISK PROTECTOR ASSEMBLED TOGETHER BY CLINCHING

(30) Priorité: 26.04.2011 FR 1153545
(43) Date de publication de la demande: 05.03.2014
(73) Titulaire: Peugeot Citroën Automobiles SA, 78140 Vélizy Villacoublay (FR)
(72) Inventeur: SCHANG, Vincent, F-68700 Uffholtz (FR)
(74) Mandataire: Rosenberg, Muriel Sylvie
(86) Numéro de dépôt international: PCT/FR2012/050793
(87) Numéro de publication internationale: WO 2012/146854

(56) Documents cités:
- EP-A1- 2 148 110
- DE-A1- 10 155 645
- DE-A1-102005 059 071
- FR-A1- 2 858 033

## Description

L'invention concerne un dispositif ou organe de protection de disque de frein d'un véhicule. Plus particulièrement, l'invention concerne une protection de disque de frein comprenant une partie protectrice en aluminium. L'invention concerne également un support de roue ainsi qu'un véhicule équipé d'un tel dispositif.

De manière concomitante à l'apparition des disques de frein l'industrie automobile a développé des systèmes de protection de ces organes de freinage. Cette apparition correspond à un souhait d'augmenter la sécurité des véhicules, la durée de vie des pièces concernées et la stabilité des systèmes de freinage vis-à-vis de l'apparition du crissement. Au quotidien ces organes sont exposés à des contraintes très agressives. En effet un protecteur de disque doit résister à des projections de gravillons à grande vitesse. Dans le contexte de l'automobile l'énergie cinétique des projectiles devient destructrice. La répétition des chocs de projectile constitue une sollicitation dynamique avec des efforts de grande amplitude. Encore liées à la vitesse mais combinées aux imperfections de la route sont présentes des contraintes de sollicitation en fatigue vibratoire dont l'impact est lié au poids et à l'inertie propre des protections. Ce cas de sollicitation en fatigue présente des amplitudes de sollicitation moindre mais un nombre de cycle important. De la vitesse du véhicule découle également des freinages appuyés qui peuvent échauffer les disques et par radiation transmettre cette chaleur aux protections. On atteint ici des températures de l'ordre de 300 °C. Les protecteurs de disques subissent ainsi des cycles de chauffage et refroidissement. La corrosion influe également sur la durée de vie de cet organe. En effet, l'environnement présente des agents chimiques dont l'action est amplifiée par les hautes températures générées par les phases de freinages appuyés. Les hautes températures peuvent modifier la structure métallurgique de la protection. Soulignons qu'il existe ici un phénomène fatigue-corrosion qui est une contrainte à part entière qui amplifie et accélère la détérioration des protections. Toutes ces sollicitations en fatigue ont des paramètres différents et demandent des solutions qui peuvent être opposées.

En fonction des intempéries, les systèmes de freinage opèrent avec des venues d'eau. Le coefficient de friction d'un couple acier/garniture, aussi élevé soit-il, est réduit en présence d'eau. La fonction de cache est donc à maximiser pour garantir une sécurité adéquate.

Une dernière contrainte commune à tous les véhicules est la recherche de gain de poids. Cette évolution permet de diminuer l'inertie des véhicules pour diminuer la consommation en énergie motrice et réduire le travail mécanique nécessaire lors des phases de freinages. Cette évolution contribue à diminuer le poids des masses non suspendues et donc à réduire l'émission de CO². Une voie permettant de gagner sur la balance est le recours à des alliages légers. Or certains métaux tels l'aluminium montrent des phénomènes de gonflement lorsqu'ils s'oxydent - phénomènes favorisés dès que la température dépasse les 80 °C, ce qui est très courant pour un protecteur de disque comme nous l'avons exposé précédemment. Ces gonflements deviennent néfastes en cas d'assemblage d'une tôle alu avec une tôle acier par clinchage en raison du rapprochement des surfaces de contact.

Le mode de fixation du protecteur de disque sur son support est l'utilisation de vis qui sont en acier.

Comme nous le constatons cet organe subit des contraintes interdépendantes et doit garantir la sécurité du conducteur.

A la lecture des solutions existantes, on peut découvrir des solutions qui abordent ces problématiques mais qui n'y apportent que des réponses partielles.

Par exemple la demande de brevet DE 101 55 645 A1 présente un dispositif constitué de deux pièces en forme de croissants concentriques en aluminium dont l'assemblage est réalisé par un minimum de 14 points de clinchage répartis linéairement sur la zone de contact. Cette solution, bien que faisant appel à de l'aluminium, reste lourde. En effet, la jonction entre le support et la surface matérialisant la protection est massive, et donc lourde. De plus, la pièce de jonction en aluminium est directement fixée par vis sur son support. Avec le temps, les vibrations et les écarts de température vont altérer ses points de fixations sur le support. Au bout de quelques années les percements pour vis ou autre n'assurent plus efficacement leur rôle. Pour finir, la surface de clinchage entre les deux croissants est sujette au gonflement car la surface de contact est importante et comme la corrosion galvanique est fonction de la surface de contact, on aura une corrosion galvanique plus prononcée sur ce genre de concept.

Une autre solution apportée à la protection d'un disque frein est contenue dans la demande de brevet FR 2 858 033 A1. Cette solution comprend un disque et des pattes de métaux de même nature: ils peuvent être assemblés par soudage. Compte tenu de la caractéristique élastique des pattes de fixation, l'ensemble du protecteur de disque est en acier. Cette solution est particulièrement lourde et contribue à augmenter le poids total du véhicule.

Comme nous le constatons, le problème abordé est complexe et ne trouve pas de solution par une combinaison triviale de caractéristiques susmentionnées.

L'invention a pour objectif de proposer un dispositif de protection de disque de frein et de résoudre au moins un des problèmes énoncés. L'organe de protection doit à la fois résister à des chocs mécaniques et thermiques, à une sollicitation en fatigue vibratoire et à des contraintes de corrosion. Cette fonction doit être remplie sans augmenter le poids final de la solution. Idéalement elle doit aussi être simple et économique. Le moyen de fixation retenu doit résister aux contraintes internes liées aux contraintes mécaniques externes et internes. Ces dernières sont produites par les chocs extérieurs, la fatigue vibratoire et les gonflements de l'aluminium lors de l'oxydation à l'interface alu/acier recevant les clinchages,

L'invention a pour objet un dispositif de protection de disque de frein destiné à un véhicule comprenant une partie protectrice en aluminium et une partie de montage assemblée à la partie protectrice et destinée au montage du dispositif sur un support, la partie de montage étant dans un matériau métallique différent de celui de la partie protectrice, préférentiellement en acier; remarquable en ce que la partie de montage comprend au moins une patte de fixation. Préférentiellement, la partie de montage comprend au moins deux pattes de fixation. Plus préférentiellement encore, elle en comprend au moins trois. L'utilisation de trois pattes permet de bien reprendre les efforts de fatigue vibratoire et de garantir la faisabilité des pattes de fixation lors du processus de fabrication notamment par emboutissage. De plus, la faible taille des pattes de fixation permet d'appliquer un revêtement anti-corrosion peu onéreux, notamment par passage au « tonneau » des pattes

Selon un mode avantageux de l'invention, la ou au moins une des pattes de fixation est assemblée à la partie protectrice par au moins un, préférentiellement plusieurs, point(s) de clinchage disposé(s) sur la portion de la patte qui est en contact avec ladite partie protectrice.

Les diamètres des points de clinchage peuvent être compris entre 14.00 mm et 4.00 mm. Chaque diamètre de clinchage présente une résistance mécanique différente. Les diamètres de clinchage retenus seront adaptés à l'épaisseur des tôles et aux contraintes mécaniques à reprendre. En fonction de la forme de la patte de fixation les différents clinchages vont être sollicités différemment. Il peut être opportun de choisir des points de clinchage de gros diamètre proches des coudes pour reprendre les efforts d'arrachement puis un clinchage plus petit en pointe de pied pour bloquer le pied en basculement. Un clinchage en trois points est une solution intéressante pour l'optimisation de la masse et vis-à-vis de la corrosion galvanique. En effet, la corrosion galvanique étant fonction de la surface de contact, on aura une corrosion galvanique plus prononcée avec une surface importante.

La zone de contact entre la protection et une patte peut recevoir une colle (avec une tenue à la température >150°C mini) pour améliorer l'interface et réduire la corrosion.

La fixation peut être mixte: allier un clinchage et d'autres modes de fixation des pattes tels que rivets, boulonnage. Cette hétérogénéité peut être observée entre deux pattes ou sur une même patte.

Selon un autre mode avantageux de l'invention, la portion de la patte qui est en contact avec la partie protectrice et le ou les points de clinchage sont configurés pour que la surface de ladite portion soit inférieure à 15 fois, préférentiellement 10 fois, la surface du ou des points de clinchage.

Selon un encore autre mode avantageux de l'invention, la portion de la patte qui est en contact avec la partie protectrice et le ou les points de clinchage sont configurés pour que le bord libre de ladite portion soit distant du centre d'un point de clinchage le plus proche d'une valeur inférieure à 3 fois, préférentiellement 2 fois, le diamètre dudit point de clinchage.

Selon un encore autre mode avantageux de l'invention, la patte est assemblée à la partie protectrice par plusieurs points de clinchage, les points de clinchage étant configurés pour que la distance entre deux points de clinchage de chaque paire de points de clinchage, mesurée entre les bords respectifs desdits points, soit inférieure à 3 fois, préférentiellement 2 fois, le diamètre moyen de ladite paire de points de clinchage.

Selon un encore autre mode avantageux de l'invention, le dispositif comprend plusieurs pattes de fixation et en ce que lesdites pattes de fixation ont des longueurs différentes de manière à ce que la fréquence propre de l'ensemble puisse être optimisée.

Selon un encore autre mode avantageux de l'invention, la pièce protectrice présente une forme généralement courbée et le dispositif comprend plusieurs pattes de fixation réparties préférentiellement de manière homogène le long de pièce protectrice.

Selon un encore autre mode avantageux de l'invention, la ou au moins une des pattes de fixations est en acier zinc nickel ou zinc lamellaire.

Selon un encore autre mode avantageux de l'invention, la ou au moins une des pattes est réalisée en un matériau différent des autres pattes.

Selon un encore autre mode avantageux de l'invention, la partie protectrice est réalisée en aluminium série 3000. La protection est réalisée en aluminium série 3000 pour limiter les effets corrosifs et le gonflement. Cette nuance permet d'avoir une résistance à la corrosion adaptée au cas d'application. En plus des nuances 3002 à 3007, on peut choisir des nuances type 3100 ou 3200. Grâce à ce choix de matériau, la résistance à la corrosion est suffisante et résiste aux agents extérieurs sans traitement de surface.

L'invention a également pour objet un support de roue de véhicule comprenant un disque de frein et un dispositif de protection du disque de frein, remarquable en ce que le dispositif de protection du disque est conforme à l'invention.

L'invention a également pour objet un véhicule équipé dudit support et/ou dudit dispositif.

La solution retenue permet d'offrir une protection résistante tout en restant légère. Le gain de poids est caractérisé par le fait que la surface protectrice se limite à la surface du disque sans continuer jusqu'au support pour y être fixé. Cette fixation est réalisée par des pattes de fixation légères et robustes. Le caractère souple des pattes de fixation permet d'accompagner les déformations dans l'aluminium sans engendrer de contraintes mécaniques de cisaillement destructrices dans les points de fixation.

La fixation par clinchage est résistante à la fatigue. Elle reprend efficacement les efforts de cisaillement. Cette solution n'est pas débouchante; par conséquent elle n'est pas pénalisante en termes de corrosion. Enfin ce procédé est parmi les plus économiques à réaliser et à contrôler.

Le choix judicieux des matériaux permet de s'affranchir d'un traitement de surface sur l'ensemble du protecteur de disque qui s'avère coûteux car les exigences de tenue à la corrosion sont sévères. Les sollicitations environnementales à protéger sont les suivantes : projection de gravillons, sels, neige, eau, température du disque et rayonnement, chocs thermiques...

Mécaniquement, l'ensemble est résistant à des contraintes de fatigue grâce à l'optimisation du poids et des pattes en aciers particulièrement adaptées pour recevoir une fixation de type vis. La durée de vie de la protection est ainsi augmentée à moindre coût.

D'autres caractéristiques et avantages de la présente invention seront mieux compris à l'aide de la description et des dessins parmi lesquels :
- La figure 1 est une représentation en perspective d'un dispositif de protection de disque de frein selon l'invention. L'organe de freinage, bien connu de l'homme de métier, n'est pas représenté sur cette figure car il nuirait à la bonne visualisation de l'invention.
- La figure 2 est une vue en coupe sagittale d'une des pattes de fixation du dispositif de la figure 1. Une partie de la protection en aluminium est également représentée au niveau de la base de la patte de fixation. Les points de clinchage nécessaires à l'assemblage sont représentés.
- La figure 3 est une vue en coupe agrandie d'un point de clinchage de la figure 2. La déformation engendrée par le point de clinchage dans les deux métaux est mise en avant.

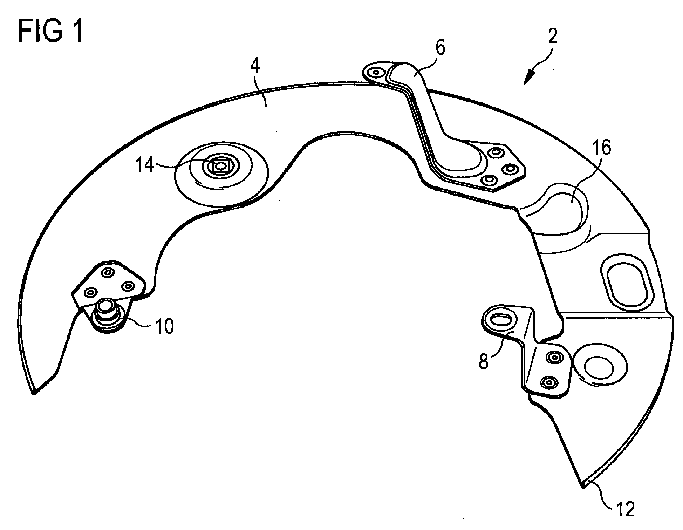

Le dispositif de protection 2 de la figure 1 est constitué d'une tôle en aluminium 4 ayant une forme de croissant de lune ou de « C » venant se placer à l'intérieur de la jante de la roue. La surface de cette tôle de protection ajoutée à celle de l'étrier de frein permet de constituer un opercule à l'intérieur de la jante. La forme du dispositif de protection permet un montage de celui-ci sur véhicule après le montage du disque et de l'étrier.

Le contour intérieur de la tôle 4 est délimité de manière à venir épouser les organes présents dans le train roulant, notamment l'étrier de frein. Le pourtour extérieur de la protection est délimité par un pliage qui améliore la rigidité intrinsèque et la résistance aux chocs les plus importants sans augmenter l'épaisseur initiale de la tôle.

La surface de tôle 4 est également travaillée. Elle reçoit des bossages 14 et réservations 16 pour permettre la fixation de capteurs ou permettre le passage de durites de l'étrier de frein.

Le matériau choisi pour la pièce protectrice 4 est l'aluminium série 3000 - aluminium manganèse. Cette nuance permet de limiter les effets corrosifs et le gonflement lors de sollicitation thermique. La nuance retenue peut être de l'aluminium 3003, de l'aluminium 3004, de l'aluminium 3005, choisis pour leur propriété mécanique et leur résistance à la corrosion.

Sur cette pièce protectrice viennent se fixer les pattes de fixation 6, 8 et 10.

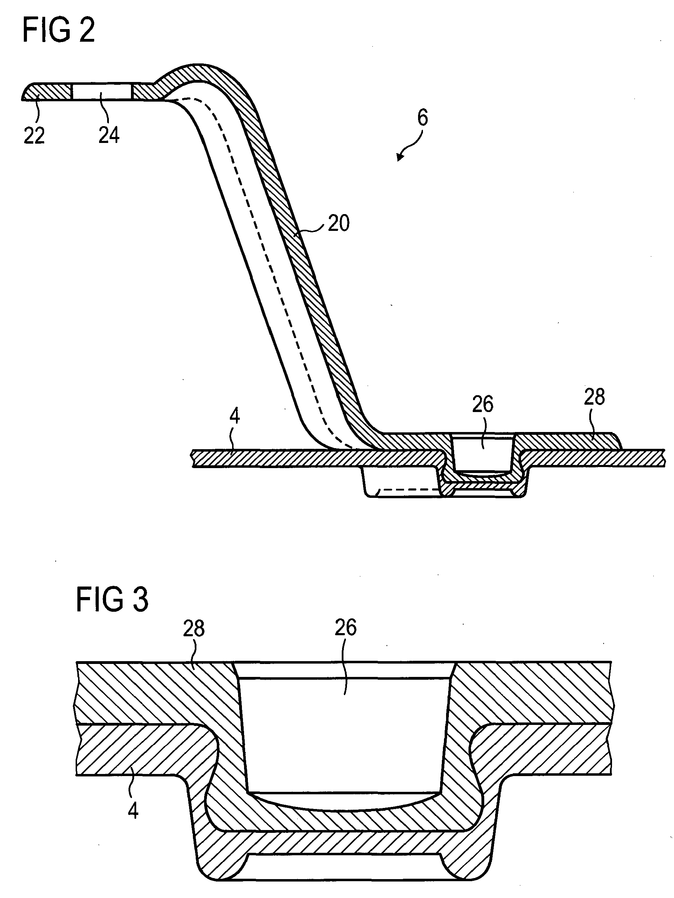

Par patte de fixation on entend un élément de fixation longitudinal ayant une section type. Chaque extrémité constitue une surface fonctionnelle qui est destinée à assurer une fixation. Dans la configuration présente et en relation avec la figure 2, on nomme le pied 28 la partie sur la partie protectrice 4 et la tête 22 celle qui se monte sur le support (non représenté).

Le pied 28 de la patte 6 est fixé sur la partie protectrice 4 par clinchage 26. Le corps 20 de la patte 6 est une tôle emboutie de manière à en augmenter la rigidité.

L'emboutissage peut se prolonger sur le pied 28 et la tête 22 dans le but de conférer une rigidité à l'ensemble de la patte de fixation 6. Le corps de la patte 20 est délimité du pied 28 ou de la tête 22 par un coude.

Avec leurs formes allongées, les pattes de fixation ont des moments d'inertie différents dans l'axe de leur épaisseur ou de la largeur. Pour exploiter au mieux ces différences il convient de répartir les orientations des pattes de fixation de manière différente pour augmenter la rigidité de la fixation de la protection sur le support. Selon un mode avantageux de l'invention, les pattes de fixations sont réparties suivant une distribution homogène en étant espacées d'angles égaux sur le pourtour de la pièce protectrice.

Suivant un mode avantageux de l'invention, les corps des pattes de fixation ont des longueurs et/ou largeurs différentes de manières à ce qu'elles aient des fréquences propres éloignées les unes des autres pour éviter les phénomènes de grincement sonore. On cherche également à éviter des mouvements d'oscillation avec des amplitudes de nature à endommager le dispositif.

Les pattes de fixation sont réalisées en acier zinc nickel ou zinc lamellaire pour offrir une résistance à la corrosion adaptée. Les pattes peuvent être réalisées en différentes nuances d'acier pour répondre à des contraintes différentes.

Les pieds des pattes de fixations 6, 8, 10 sont assemblés sur le support par deux ou trois points de clinchage.

Le mode de fixation de la protection avec ses pattes est le clinchage. Le clinchage qui est une technique d'assemblage réalisée à froid consiste à emboutir deux matériaux et les imbriquer l'un dans l'autre de manière à constituer un encastrement rigide. Ce procédé est destiné à des tôles et s'applique également à des matériaux de résistances différentes. Le procédé de clinchage retenu peut être un clinchage à point rond, un clinchage à point carré, un clinchage à point rectangulaire et/ou un clinchage à point plat. Il permet d'assembler des métaux de différentes natures ayant des températures de fusion éloignées comme l'aluminium et l'acier. Cette différence complique l'éventualité d'un soudage de ce couple de matériau.

Les types de clinchages peuvent être différents sur une même patte ou d'une patte à l'autre.

Les points de clinchage 26 sont répartis sur la patte de fixation 6 de manière homogène. Ils sont aussi répartis de manière à diminuer la surface de contact entre la patte 6 et la pièce protectrice 4 par rapport au nombre de points de clinchage.

Lorsque l'on fait référence à l'espacement des points de clinchage sur la patte de fixation on peut retenir comme paramètre pertinent le pourcentage de la distance mesurée de bord à bord par rapport au diamètre nominal dudit point de clinchage. Dans le cas de points de clinchage de points de diamètres différents on prend comme diamètre le diamètre moyen des deux points. Dans le cas présent l'espacement entre deux points est inférieur à 400%, préférentiellement 300%, plus préférentiellement encore 200%, et encore plus préférentiellement 100%, du diamètre moyen des deux points.

Pour prendre en compte les effets de bord entre le point de clinchage et la tôle du pied de la patte on définit une distance entre le bord libre du pied de la patte et le centre d'un point de clinchage le plus proche. Cette distance minimale est préférentiellement inférieure à 300%, préférentiellement 200%, plus préférentiellement encore 100%, du diamètre dudit point de clinchage.

Dans le cas présent, les différents clinchages sont de même diamètre. Ils peuvent être de diamètres différents pour ajuster la résistance mécanique des fixations. Les différences de diamètres peuvent s'observer sur une même patte ou entre 2 pattes.

L'illustration présente des points de clinchage de même nature et ronds. Dans le cas de points carrés, on détermine les différentes distances et rapports en remplaçant le diamètre par la diagonale du même point.

Le nombre de clinchage peut être différent suivant les pattes.

## Revendications

1. Dispositif de protection de disque de frein (2) destiné à un véhicule comprenant une partie protectrice (4) en aluminium et une partie de montage (6, 8, 10) assemblée à la partie protectrice (4) et destinée au montage du dispositif (2) sur un support, la partie de montage (6, 8, 10) étant dans un matériau métallique différent de celui de la partie protectrice (4), préférentiellement en acier ;
**caractérisé en ce que**
la partie de montage comprend au moins une patte de fixation (6, 8, 10).

2. Dispositif (2) suivant la revendication 1, **caractérisé en ce que** la ou au moins une des pattes de fixation (6, 8, 10) est assemblée à la partie protectrice (4) par au moins un, préférentiellement plusieurs, point(s) de clinchage (26) disposé(s) sur la portion (28) de la patte (6) qui est en contact avec la partie protectrice (4).

3. Dispositif (2) suivant la revendication 2, **caractérisé en ce que** la portion (28) de la patte (6) qui est en contact avec la partie protectrice (4) et le ou les points de clinchage (26) sont configurés pour que la surface de ladite portion (28) soit inférieure à 15 fois, préférentiellement 10 fois, la surface du ou des points de clinchage (26).

4. Dispositif (2) suivant l'une des revendications 2 et 3, **caractérisé en ce que** la portion (28) de la patte (6) qui est en contact avec la partie protectrice (4) et le ou les points de clinchage (26) sont configurés pour que le bord libre de ladite portion (28) soit distant du centre d'un point de clinchage le plus proche (26) d'une valeur inférieure à 3 fois, préférentiellement 2 fois, le diamètre dudit point de clinchage (26).

5. Dispositif (2) suivant l'une des revendications 2 à 4, **caractérisé en ce que** la ou au moins une des pattes de fixation (6) est assemblée à la partie protectrice (4) par plusieurs points de clinchage (26), les points de clinchage étant configurés pour que la distance entre deux points de clinchage de chaque paire de points de clinchage (26), mesurée entre les bords respectifs desdits points, soit inférieure à 3 fois le diamètre moyen de ladite paire de points de clinchage.

6. Dispositif (2) suivant l'une des revendications 1 à 5, **caractérisé en ce qu'**il comprend plusieurs pattes de fixation (6, 8, 10) et **en ce que** lesdites pattes de fixations ont des longueurs différentes de manière à ce que leurs fréquences propres soient différentes.

7. Dispositif (2) suivant l'une des revendications 1 à 6, **caractérisé en ce que** la pièce protectrice (4) présente une forme généralement courbée et **en ce que** le dispositif (2) comprend plusieurs pattes de fixation (6, 8, 10) réparties préférentiellement de manière homogène le long de la pièce protectrice (4).

8. Dispositif (2) suivant l'une des revendications 1 à 7, **caractérisé en ce que** la ou au moins une des pattes de fixations (6, 8, 10) est en acier zinc nickel ou zinc lamellaire.

9. Dispositif (2) suivant l'une des revendications 1 à 8, **caractérisé en ce que** la partie protectrice (4) est réalisée en aluminium série 3000.

10. Support de roue de véhicule comprenant un disque de frein et un dispositif de protection du disque de frein (2), **caractérisé en ce que** le dispositif de protection du disque (2) est conforme à l'une des revendications 1 à 9.

## Patentansprüche

1. Bremsscheiben-Schutzvorrichtung (2) für ein Fahrzeug, umfassend einen Schutzteil (4) aus Aluminium und einen Montageteil (6, 8, 10), der mit dem Schutzteil (4) verbunden ist und für die Montage der Vorrichtung (2) auf einer Unterlage bestimmt ist, wobei der Montageteil (6, 8, 10) aus einem Metallmaterial, das sich von dem des Schutzteils (4) unterscheidet, vorzugsweise aus Stahl, ist,
**dadurch gekennzeichnet, dass**
der Montageteil mindestens eine Befestigungslasche (6, 8, 10) umfasst.

2. Vorrichtung (2) nach Anspruch 1, **dadurch gekennzeichnet, dass** die oder mindestens eine der Befestigungslaschen (6, 8, 10) mit dem Schutzteil (4) anhand mindestens eines, vorzugsweise mehrerer Durchsetzfügepunkte (26) verbunden ist, der/die auf dem Abschnitt (28) der Lasche (6) angeordnet ist/sind, der mit dem Schutzteil (4) im Kontakt ist.

3. Vorrichtung (2) nach Anspruch 2, **dadurch gekennzeichnet, dass** der Abschnitt (28) der Lasche (6), der mit dem Schutzteil (4) im Kontakt ist, und der oder die Durchsetzfügepunkte (26) konfiguriert sind, damit die Oberfläche des Abschnitts (28) 15 Mal, vorzugsweise 10 Mal kleiner ist als die Oberfläche des oder der Durchsetzfügepunktpunkte (26).

4. Vorrichtung (2) nach einem der Ansprüche 2 und 3, **dadurch gekennzeichnet, dass** der Abschnitt (28) der Lasche (6), der mit dem Schutzteil (4) im Kontakt ist, und der oder die Durchsetzfügepunkte (26) konfiguriert sind, damit der freie Rand des Abschnitts (28) vom Zentrum eines nächsten Durchsetzfügepunkts (26) in einem Wert beabstandet ist, der 3 Mal, vorzugsweise 2 Mal kleiner ist als der Durchmesser des Durchsetzfügepunkts (26).

5. Vorrichtung (2) nach einem der Ansprüche 2 bis 4, **dadurch gekennzeichnet, dass** die oder mindestens eine der Befestigungslaschen (6) mit dem Schutzteil (4) anhand mehrerer Durchsetzfügepunkte (26) verbunden ist, wobei die Durchsetzfügepunkte konfiguriert sind, damit der Abstand zwischen zwei Durchsetzfügepunkten jedes Paars von Durchsetzfügepunkten (26), gemessen zwischen den jeweiligen Rändern der Punkte, 3 Mal kleiner als der mittlere Durchmesser des Paars von Durchsetzfügepunkten ist.

6. Vorrichtung (2) nach einem der Ansprüche 1 bis 5, **dadurch gekennzeichnet, dass** sie mehrere Befestigungslaschen (6, 8, 10) umfasst und dass die Befestigungslaschen unterschiedliche Längen haben, so dass ihre Eigenfrequenzen unterschiedlich sind.

7. Vorrichtung (2) nach einem der Ansprüche 1 bis 6, **dadurch gekennzeichnet, dass** das Schutzteil (4) eine allgemein gekrümmte Form aufweist und dass die Vorrichtung (2) mehrere Befestigungslaschen (6, 8, 10) umfasst, die vorzugsweise gleichmäßig entlang des Schutzteils (4) verteilt sind.

8. Vorrichtung (2) nach einem der Ansprüche 1 bis 7, **dadurch gekennzeichnet, dass** die oder mindestens eine der Befestigungslaschen (6, 8, 10) aus Zink-Nickel- oder Zinklamellen-Stahl ist.

9. Vorrichtung (2) nach einem der Ansprüche 1 bis 8, **dadurch gekennzeichnet, dass** der Schutzteil (4) aus Aluminium Serie 3000 hergestellt ist.

10. Fahrzeugradunterlage, umfassend eine Bremsscheibe und eine Schutzvorrichtung der Bremsscheibe (2), **dadurch gekennzeichnet, dass** die Schutzvorrichtung der Scheibe (2) einem der Ansprüche 1 bis 9 entspricht.

## Claims

1. Device (2) for protecting a brake disc intended for a vehicle, comprising a protective part (4) made from aluminium and a mounting part (6, 8, 10) connected to the protective part (4) and intended for mounting the device (2) on a support, the mounting part (6, 8, 10) being made from a metal material different from that of the protective part (4), preferentially steel;
**characterised in that**
the mounting part comprises at least one fixing lug (6, 8, 10).

2. Device (2) according to claim 1, **characterised in that** the at least one of the fixing lugs (6, 8, 10) is connected to the protective part (4) by at least one, and preferentially a plurality of, clinching point(s) (26) disposed on the portion (28) of the lug (6) that is in contact with the protective part (4).

3. Device (2) according to claim 2, **characterised in that** the portion (28) of the lug (6) that is in contact with the protective part (4) and the clinching point or points (26) is/are configured so that the surface area of said portion (28) is less than 15 times, and preferentially 10 times, the surface area of the clinching point or points (26).

4. Device (2) according to one of claims 2 and 3, **characterised in that** the portion (28) of the lug (6) that is in contact with the protective part (4) and the clinching point or points (26) is/are configured so that the free edge of said portion (28) is distant from the centre of a closest clinching point (26) by an amount that is less than 3 times, preferentially less than twice, the diameter of said clinching point (26).

5. Device (2) according to one of claims 2 to 4, **characterised in that** the or at least one of the fixing lugs (6) is connected to the protective part (4) by a plurality of clinching points (26), the clinching points being configured so that the distance between two clinching points of each pair of clinching points (26), measured between the respective edges of said points, is less than 3 times the mean diameter of said pair of clinching points.

6. Device (2) according to one of claims 1 to 5, **characterised in that** it comprises a plurality of fixing lugs (6, 8, 10) and **in that** said fixing lugs have different lengths so that their natural frequencies are different.

7. Device (2) according to one of claims 1 to 6, **characterised in that** the protective piece (4) has a roughly curved shape and **in that** the device (2) comprises a plurality of fixing lugs (6, 8, 10) preferentially distributed evenly along the protective piece (4).

8. Device (2) according to one of claims 1 to 7, **characterised in that** the or at least one of the fixing lugs (6, 8, 10) is made from zinc nickel coated steel or lamellar zinc coated steel.

9. Device (2) according to one of claims 1 to 8, **characterised in that** the protective part (4) is produced from 3000 series aluminium.

10. Vehicle wheel support comprising a brake disc and a device protecting the brake disc (2), **characterised in that** the device protecting the disc (2) is in accordance with one of claims 1 to 9.
